# NEW EUROPEAN PATENT SPECIFICATION

(11) **EP 1 459 830 B2**
(45) Date of publication and mention of the opposition decision: **20.04.2011**
(45) Mention of the grant of the patent: 19.03.2008
(21) Application number: 04380061.4
(22) Date of filing: 22.03.2004
(51) Int. Cl.: B23K 9/167, B23K 9/29, B23K 35/38, C23C 8/10

(54) **Tig welding method**
WIG Schweissverfahren
Procédé de soudageTIG

(30) Priority: 19.03.2003 JP 2003076318
(43) Date of publication of application: 22.09.2004
(73) Proprietor: Taiyo Nippon Sanso Corporation, Shinagawa-ku, Tokyo (JP)
(72) Inventor: Satou, Toyoyuki, Tokyo (JP); Fujii, Hidetoshi, Osaka 567-0047 (JP); Nakamura, Koji, Tokyo (JP); Lu, Shanping, Osaka 567-0047 (JP); Kimura, Yutaka, Tokyo (JP); Nogi, Kiyoshi, Osaka 567-0047 (JP)
(74) Representative: Becker Kurig Straus

(56) References cited:
- EP-A- 0 799 666
- DE-A- 2 608 115
- FR-A1- 2 251 153
- JP-A- 11 267 843
- US-A- 2 859 329
- US-A- 4 161 645
- US-A- 5 597 109
- DATABASE WPI Section Ch, Week 198045 Derwent Publications Ltd., London, GB; Class M23, AN 1980-79592C XP002285817 & JP 55 122684 A (KYODO SANSO KK) 20 September 1980 (1980-09-20)
- PATENT ABSTRACTS OF JAPAN vol. 0101, no. 67 (M-488), 13 June 1986 (1986-06-13) & JP 61 017371 A (MITSUBISHI HEAVY IND LTD), 25 January 1986 (1986-01-25)
- PATENT ABSTRACTS OF JAPAN vol. 2003, no. 05, 12 May 2003 (2003-05-12) & JP 2003 019561 A (USHIO MASAO; NAKADA KAZUHIRO; TANAKA MANABU; IWATANI INTERNATL CORP), 21 January 2003 (2003-01-21)
- DATABASE WPI Section Ch, Week 198542 Derwent Publications Ltd., London, GB; Class M23, AN 1985-258593 XP002285818 & JP 60 170580 A (MITSUBISHI HEAVY IND CO LTD) 4 September 1985 (1985-09-04)
- HART P.H.M., WELDING INSTITUTE: 'The effets of residual, impurity, and microalloying elements on weldability and weld properties' 15 November 1983 - 17 November 1983, LONDON, pages 36-1 - 36-9
- WELDING & METAL FABRICATION: 'Mastering the mixtures-Shielding gases for arc welding:Pt1' March 1998, pages 36 - 38-40
- MILLS K.C. ET AL: 'Marangoni effects in welding' 1998, pages 911 - 925

## Description

### BACKGROUND OF THE INVENTION

The present invention relates to a tungsten-inert-gas (TIG) welding method according to the preamble of, respectively, claims 1, 2 (see, for example, US-A-4 161 645).

### Description of Related Art

Conventionally, a structure using a steel-based material, such as, carbon steel or stainless steel, as a base material is welded with TIG weld. TIG weld is widely used as a method of welding structures requiring high reliability for easy performance and formation of high-quality welded metal portion, as described in, for example, Japanese Patent Application Laid Open No. 2003-019561.

However, since the steel-based materials including stainless steel used in recent years usually contain less sulfur as an impurity, the welded metal portion has a wide and shallow weld-penetration shape in the TIG welding process so that the welding effect is insufficient. To form a welded metal portion deeply, increasing the number of passes is required. However, when the number of passes is increased, the welding efficiency is adversely lowered.

Other welding methods include MAG (metal-active-gas) weld, MIG (metal-inert-gas) weld and plasma weld, etc., which are adopted in cases where deep welded metal portions and high-efficiency welding performance are required. However, the MAG or MIG welding method has some problems including deterioration of welding quality and occurrence of welding defects. Moreover, plasma weld has a drawback that the tolerance range of groove accuracy or other performance condition is so narrow making the method difficult to use in a construction site or the like.

A method for improving the drawback of shallow welded metal portion that is significant in TIG weld has been proposed, utilizing a shielding gas composed of a mixed gas obtained by mixing an inert gas like argon with hydrogen or helium, etc. Moreover, another TIG welding method using active flux, i.e., the A-TIG welding method, has also been proposed recently.

However, the welding method that uses a shielding gas containing hydrogen is difficult to apply to a material other than austenitic stainless steel because of some problems including generation of blowholes and embrittlement of the welded metal portion. In addition, using helium is not preferable in consideration of the cost. Moreover, the workability of the method using active flux is poor, since a coating operation is required before the welding process. Moreover, since slag is generated remarkably on the weld bead, slag removal is required in multi-layer weld to prevent degradation of the bead appearance. Furthermore, a lot of fume is generated in the above welding method, so that the work environment is worse.

Moreover, in anode-type (DC electrode positive type) arc welding methods including MAG weld, a shielding gas composed of argon gas mixed with an oxidative component, such as carbon dioxide in a concentration of 20%, is used for improving the stability of electric arc. However, when an oxidative gas is used as a shielding gas in TIG weld, the electrode is easily deteriorated and cannot be used in long-time weld or used repeatedly. If a deteriorated electrode is used, the welding quality is not stable, and weld defects possibly occur.

### SUMMARY OF THE INVENTION

In view of the foregoing, this invention provides a Tungsten-inert-gas (TIG) welding method, which can form a deep welded metal portion without lowering the welding quality and make the welding performance easier, as well as improves the welding efficiency.

After studying the issue with effort, the inventor found that the shape of the welded metal portion is largely affected by convection in the molten pool, while the main factor affecting the convection is the surface tension distribution caused by the temperature distribution in the molten pool. This invention is made based on the above discovery.

The Tungsten-inert-gas (TIG) welding methods according to this invention are defined in claims 1 and 2, an electric arc is generated between an electrode and an object for welding the object. A first shielding gas including an inert gas is conducted toward the object surrounding the electrode, and a second shielding gas containing an oxidative gas is conducted toward the object along the periphery of the first shielding gas. In another embodiment of the TIG welding method, an electric arc is generated between the electrode and an object for welding the object. A first shielding gas including an inert gas is conducted toward the object surrounding the electrode, and a second shielding gas containing an oxidative gas is conducted toward the object from at least two sides of the electrodes as viewed in the welding direction. The concentration of the oxidative gas in the second shielding gas is set so that the oxygen concentration in the welded metal portion ranges from 70 wt. ppm to 220 wt. ppm. In the TIG welding methods of this invention, the oxide coating formed on the surface of the welded metal portion has a thickness of 20*µ*m or less. In further embodiments of both methods, the concentration of the oxidative gas in the second shielding gas preferably ranges from 2000 vol. ppm to 6000 vol. ppm, and more preferably from 3000 vol. ppm to 5000 vol. ppm.

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 schematically illustrates the structure of the important part of a welding equipment used in the method according to a first embodiment of this invention.

FIG. 2(a) shows the correlation between the surface tension and temperature in the molten pool, and FIG. 2(b) is a diagram showing the state of the molten pool.

FIG. 3 schematically illustrates the structure of an important part of a welding equipment used in the method according to a second embodiment of this invention, wherein FIG. 3(a) illustrates a front view of the equipment with a part thereof shown in a sectional state, and FIG. 3(b) illustrates a cross-sectional view of the equipment.

FIG. 4 illustrates a planar view of a welded object obtained by using the welding equipment shown in FIG. 3.

FIG. 5 schematically illustrates the structure of the important part of a welding equipment used in the method according to a third embodiment of this invention, wherein FIG. 5(a) illustrates a front view of the equipment with a part thereof shown in a sectional state, and FIG. 5(b) illustrates a cross-sectional view of the equipment.

FIG. 6 schematically illustrates the structure of the important part of a welding equipment used in the method according to a fourth embodiment of this invention, wherein FIG. 6(a) illustrates a front view of the equipment with a part thereof shown in a sectional state, and FIG. 6(b) illustrates a cross-sectional view of the equipment.

FIG. 7 illustrates a planar view of a welded object obtained by using the welding equipment shown in FIG. 6.

FIG. 8 schematically illustrates the structure of the important part of a welding equipment used in the method according to a fifth embodiment of this invention, wherein FIG. 8(a) illustrates a front view of the equipment with a part thereof shown in a sectional state, and FIG. 8(b) illustrates a cross-sectional view of the equipment.

FIG. 9 shows the states of the welded metal portion as the results of the welding tests in a cross-sectional view.

FIGs. 10-13 are graphs showing the results of the welding tests.

### DESCRIPTION OF THE PREFERRED EMBODIMENTS

The welding equipment used in the methods according to the embodiments of this invention are described below referring to the drawings. The welding equipment certainly includes a welding device, a control device, a gas supply and a welding power, even though they are not shown in the drawings.

### <First Embodiment>

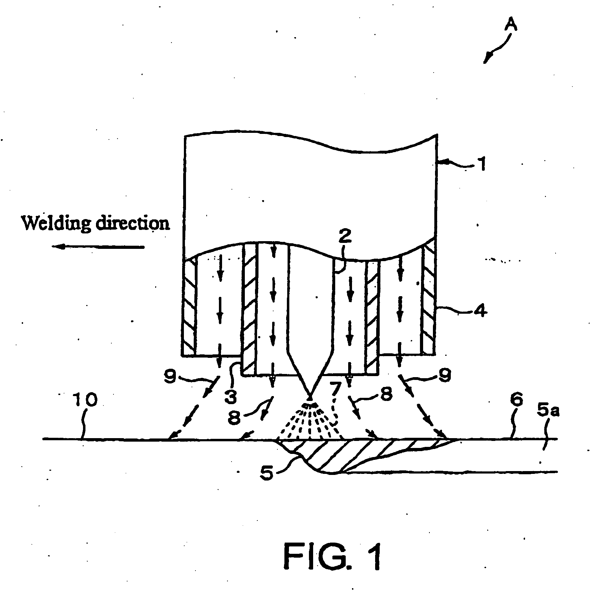

FIG. 1 illustrates a welding equipment. Referring to FIG. 1, the TIG welding equipment A is equipped with a torch 1 having a multiple tubular structure that is constituted of a tungsten electrode 2 for generating an electric arc 7 between itself and a base material (welded object) 10, a tubular inner nozzle 3 disposed surrounding the tungsten electrode 2, and a tubular outer nozzle 4 disposed surrounding the inner nozzle 3. The base material 10 is, for example, a steel-based material. Briefly speaking, the torch 1 is a multiple tubular structure having an inner nozzle 3 disposed at the periphery of the tungsten electrode 2 and an outer nozzle 4 at the periphery of the inner nozzle 3.

The tip (bottom end) of the tungsten electrode 2 is formed more protrudent than that of the inner nozzle 3 in the tip direction (downward direction). The inner nozzle 3 is disposed approximately concentric with the tungsten electrode 2 with a distance from the latter. The inner nozzle 3 can supply a first shielding gas 8 composed of a high-purity inert gas. The first shielding gas 8 can be argon (Ar) or helium (He), for example.

The outer nozzle 4 is disposed approximately concentric with the inner nozzle 3 with a distance from the latter, while a second shielding gas 9 containing an oxidative gas can be supplied through the gap between the outer nozzle 4 and the inner nozzle 3. The second shielding gas 9 can be a mixed gas obtained by adding an oxidative gas into an inert gas. The oxidative gas can be oxygen (O₂) or carbon dioxide (CO₂), for example, and the inert gas may be argon or helium.

The method of welding the base material 10 using the above welding equipment A is described as follows. As shown in FIG. 1, the tungsten electrode 2 serves as a negative electrode and the base material 10 as a positive electrode, and a voltage is applied between the torch 1 and the base material 10 to induce discharge and generate an electric arc 7. The torch 1 is moved toward the left side of the drawing to melt the base material 10 by the heat from the electric arc 7 to form a molten pool 5, so as to weld the base material 10. Moreover, the weld bead is labeled with a reference number "6" in the drawing.

During the welding operation, the first shielding gas 8 is supplied from the inner nozzle 3. The first shielding gas 8 is conducted toward the tip of the inner nozzle 3 surrounding the tungsten electrode 3 and sprayed onto the base material 10 from the tip. The first shielding gas 8 is sprayed onto the central region of the molten pool 5.

At the same time, the second shielding gas 9 containing an oxidative gas is supplied through the gap between the inner nozzle 3 and the outer nozzle 4. The second shielding gas 9 is conducted toward the tip of the outer nozzle 4 and sprayed to the base material 10 from the tip. At the moment, the second shielding gas 9 is conducted along the periphery of the first shielding gas 8 surrounding the first shielding gas 8, and is sprayed onto the peripheral region (the region located at the periphery of the central region) of the molten pool 5. The concentration of the oxidative gas like O₂ in the second shielding gas 9 is preferably 2000-6000 vol. ppm, and more preferably 3000-5000 vol. ppm. The use of the second shielding gas 9 containing an oxidative gas allows oxygen to be dissolved in the welded metal portion 5a, while the concentration of the oxidative gas in the second shielding gas 9 is set so that the oxygen concentration in the welded metal portion 5a is 70-220 wt. ppm. With the above operation, a welded structure having a welded metal portion 5a is obtained. An oxide coating is also formed on the surface of the welded metal portion 5a, while the thickness of the oxide coating is 20*µ*m or less.

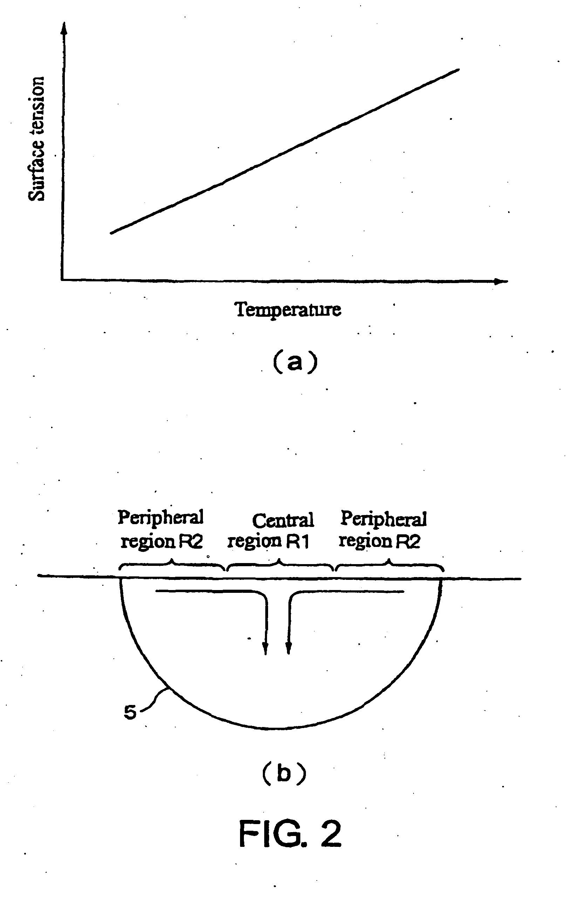

On the other hand, the surface tension of a melted metal varies with the temperature or the concentration of dissolved trace impurity like sulfur or oxygen. FIG. 2(a) shows an example of correlation between the surface tension and the temperature of a melted metal, wherein sulfur or oxygen is dissolved in the welded metal in certain concentration. According to FIG. 2(a), the surface tension increases with increasing temperature. In this case, the temperature in the peripheral region R2 of the molten pool 5 is lower than that in the central region R1, so that the surface tension in the peripheral region R2 is smaller than that in the central region R1 causing inward convection in the molten pool 5, as shown in FIG. 2(b). Moreover, even if the temperature is constant, the surface tension decreases with the increase in the concentration of oxygen dissolved in melted iron.

Because the welding equipment A is equipped with a torch 1 having a tubular inner nozzle 3 surrounding the tungsten electrode 2 and a tubular outer nozzle 4 surrounding the inner nozzle 3, the following effects are obtained.
(1) Since the first shielding gas 8 is conducted surrounding the tungsten electrode 2, the tungsten electrode 2 is protected by the first shielding gas 8, and can be prevented from being deteriorated by oxidation. Therefore, the welded structure can be obtained with good welding quality.
(2) Since the second shielding gas 9 is supplied from the gap between the inner nozzle 3 and the outer nozzle 4, it is possible to supply the first shielding gas 8 to the central region R1 of the molten pool 5 and simultaneously supply the second shielding gas 9 containing an oxidative gas to the peripheral region R2 of the molten pool 5. Thereby, the molten pool 5 can be supplied with oxygen in a required concentration, and the oxygen concentration in the peripheral region R2 can be higher than that in the central region R1. Therefore, in the molten pool 5, the surface tension in the peripheral region R2 having lower temperature and higher oxygen concentration is smaller, and that in the central region R1 having higher temperature and lower oxygen concentration is larger. Consequently, inward convection is induced in the molten pool 5 so that and the molten pool 5 can be formed deeply. Therefore, the welded metal portion 5a can be formed deeply in the base material 10.
(3) As compared with the conventional welding method using active flux, slag is hardly generated in this invention so that a slag removal operation is not required. Meanwhile, fume is also hardly generated during the welding process. Therefore, the welding operation can be easily carried out.
(4) Since the welded metal portion can be formed deeply, occurrence of poor weld-penetration or reduction in welding efficiency can be prevented.

### <Second Embodiment>

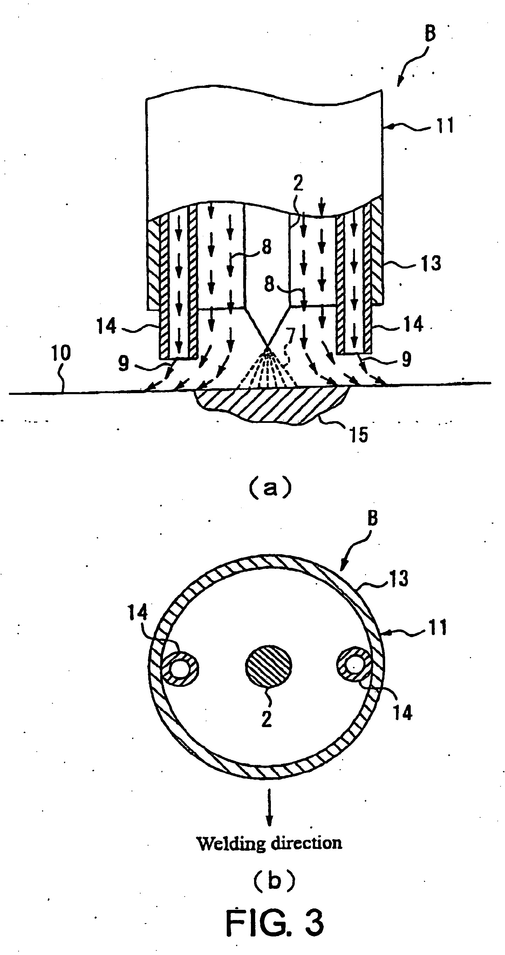

FIG. 3 illustrates another welding equipment. In the drawing and the following description, the parts similar to those in the welding equipment A of FIG. 1 are also labeled with the same reference numbers and the description thereof is not repeated again. Moreover, the "welding direction" is defined as the moving direction of the torch hereinafter, the "front side" is the side along the welding direction, and the "back side" is the side against the welding direction.

The welding equipment B is equipped with a torch 11 that includes a tungsten electrode 2, a central nozzle 13 disposed surrounding the tungsten electrode 2, and side nozzles 14 disposed between the tungsten electrode 2 and the central nozzle 13. That is, the torch 11 has a structure including a central nozzle 13 disposed at the periphery of the tungsten electrode 2 and side nozzles 14 disposed between the tungsten electrode 2 and the central nozzle 13.

The central nozzle 13 is disposed approximately concentric with the tungsten electrode 2 with a distance from the latter, capable of supplying the first shielding gas 8.

Referring to FIG. 3(b), a side nozzle 14 is disposed on each of the two sides of the tungsten electrode 2 along the welding direction. The side nozzles 14 can supply the second shielding gas 9, and are preferably formed with tips more protrudent than that of the central nozzle 13 in the tip direction. Moreover, the side nozzles 14 may be alternatively disposed at least with their tips on sides of the tungsten electrode 2 without directly spraying the second shielding gas 9 onto the weld bead.

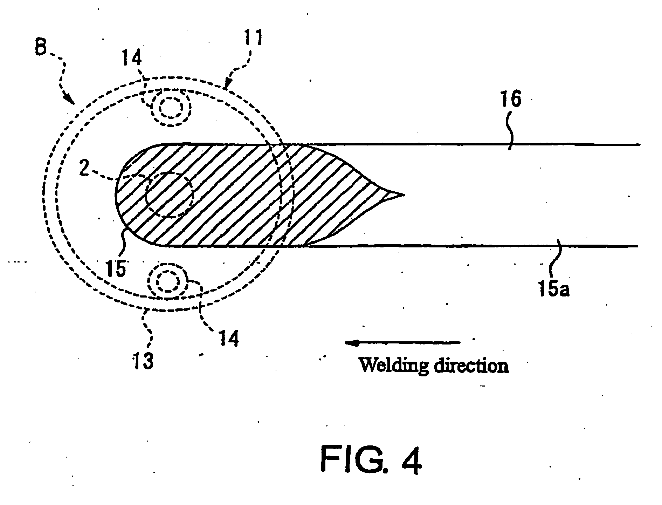

As shown in FIGs. 3 and 4, when the welding equipment B is being used to weld the base material 10, the torch 11 is moved to melt the base material 10 by the electric arc 7 to form a molten pool 15, so as to weld the base material 10. The weld bead is labeled with a reference number "16" in the drawing. During the welding operation, the first shielding gas 8 is supplied from the central nozzle 13. The first shielding gas 8 is conducted toward the tip of the central nozzle 13 surrounding the tungsten electrode 2 and sprayed onto the base material 10 from the tip. At the same time, the second shielding gas 9 is supplied from the side nozzles 14. The second shielding gas 9 is conducted toward the tips of the side nozzles 14 and sprayed onto the base material 10 from the tips. Since the second shielding gas 9 is conducted along the periphery of the first shielding gas 8 and sprayed on side portions of the peripheral region of the molten pool 15, the second shielding gas 9 is not supplied to the central region even if the torch 11 is moved in high speed. Thereby, a welded structure having a welded metal portion 15a is obtained.

Since the welding equipment B is equipped with a torch 11 including a tubular central nozzle 13 disposed surrounding the tungsten electrode 2 and side nozzles 14 disposed between the tungsten electrode 2 and the central nozzle 13, the tungsten electrode 2 can be protected from being deteriorated by oxidation, as in the case using the welding equipment A illustrated in FIG. 1. Therefore, the welded structure can be obtained with good welding quality. Moreover, since the second shielding gas 9 containing an oxidative gas can be supplied to the peripheral region of the molten pool 15, the inward convection in the molten pool 15 is enhanced so that the molten pool 15 can be formed deeply. Therefore, the welded metal portion 15a can be formed deeply in the base material 10. Furthermore, using the welding equipment B makes the welding performance easier and improves the welding efficiency.

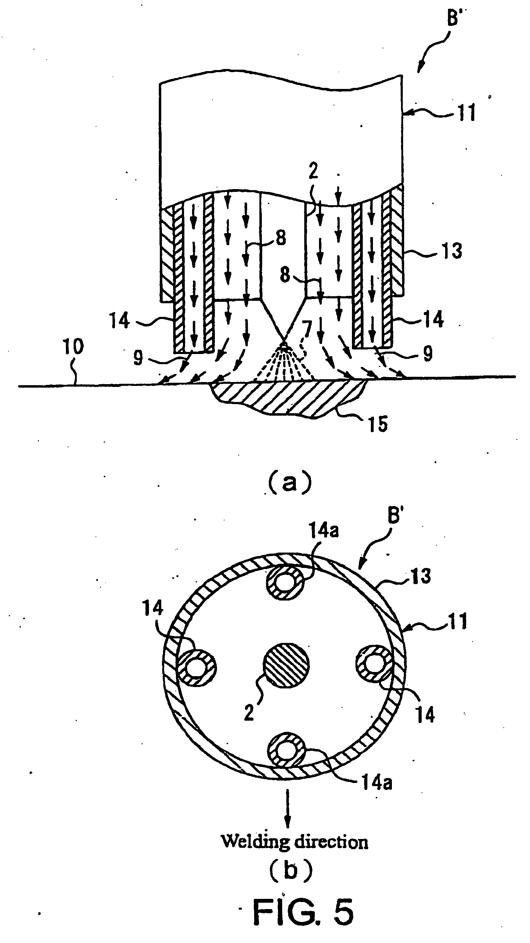

In this invention, one or more side nozzles can further be disposed on the front side and/or the back side of the electrode. Referring to FIG. 5 that illustrates another welding equipment, the welding equipment B' differs from the welding equipment B illustrated in FIG. 3 in that two more side nozzles 14a and 14b are further included. The two side nozzles 14a and 14b are disposed on the front side and the back side, respectively, of the tungsten electrode 2 between the tungsten electrode 2 and the central nozzle 13, capable of supplying the second shielding gas 9.

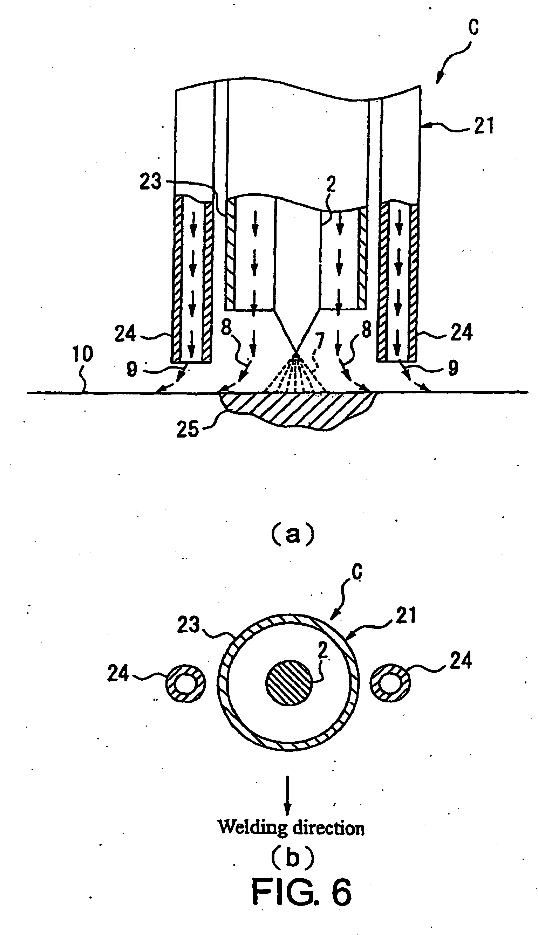

FIG. 6 illustrates a further welding equipment . The welding equipment C differs from the welding equipment B illustrated in FIG. 3 in that the side nozzles 24 are disposed outside the central nozzle 23. That is, the welding equipment is equipped with a torch 21 including a tungsten electrode 2, a tubular central nozzle 23 disposed surrounding the tungsten electrode 2, and side nozzles 24 disposed outside the central nozzle 23.

The side nozzles 24 are arranged so that each of the two sides of the tungsten electrode 2 as viewed in the welding direction is disposed with a side nozzle 24, and are preferably formed with tips more protrudent than that of the central nozzle 23 in the tip direction. The side nozzles 24 can supply the second shielding gas 9. Moreover, the side nozzles 24 may be alternatively disposed at least with their tips on sides of the tungsten electrode 2 without directly spraying the second shielding gas 9 onto the weld bead. Furthermore, the welding direction is varied with the arrangement of the welded part, but the side nozzles 24 are constantly kept on two sides of the tungsten electrode 2 as view in the welding direction even when the welding direction is changed by 90 degrees, for example.

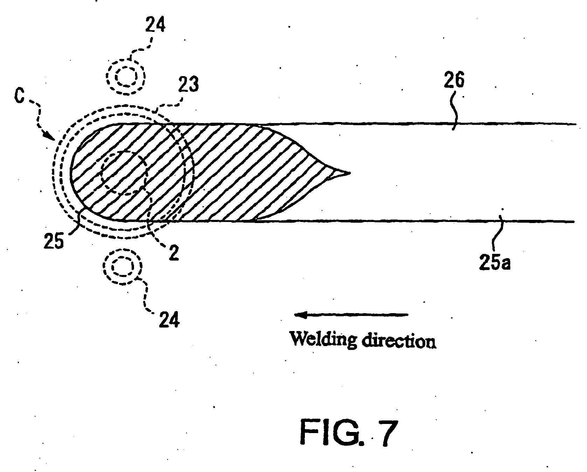

As shown in FIG. 7, when the welding equipment C is being used to weld the base material 10, the electric arc 7 melts the base material 10 to form a molten pool 25 so that the base material 10 can be welded. The weld bead is labeled with a reference number "26" in FIG. 7. During the welding operation, the first shielding gas 8 is supplied from the central nozzle 23. The first shielding gas 8 is conducted toward the tip of the central nozzle 23 surrounding the tungsten electrode 2 and sprayed onto the base material 10 from the tip. At the same time, the second shielding gas 9 is supplied from the side nozzles 24. The second shielding gas 9 is conducted toward the tips of the side nozzles 24 and sprayed onto the base material 10 from the tips. More specifically, the second shielding gas 9 is sprayed onto two side portions of the peripheral region of the molten pool 25. Thereby, a welded structure having the welded metal portion 25a is obtained.

Since the welding equipment C is equipped with a torch 21 including a tubular central nozzle 23 disposed surrounding the tungsten electrode 2 and side nozzles 24 disposed outside the central nozzle 23, the tungsten electrode 2 can be protected from being deteriorated by oxidation, as in the case using the welding equipment A illustrated in FIG. 1. Therefore, the welded structure can be obtained with good welding quality. Moreover, since the second shielding gas 9 containing an oxidative gas is supplied to the peripheral region of the molten pool 25, the inward convection in the molten pool 25 is enhanced so that the molten pool 25 can be formed deeply. Therefore, the welded metal portion 25a can be formed deeply in the base material 10. Furthermore, using the welding equipment C makes the welding performance easier and improves the welding efficiency. In addition, since the side nozzles 24 are disposed outside the central nozzle 23, the second shielding gas 9 can be supplied certainly along the periphery of the first shielding gas 8.

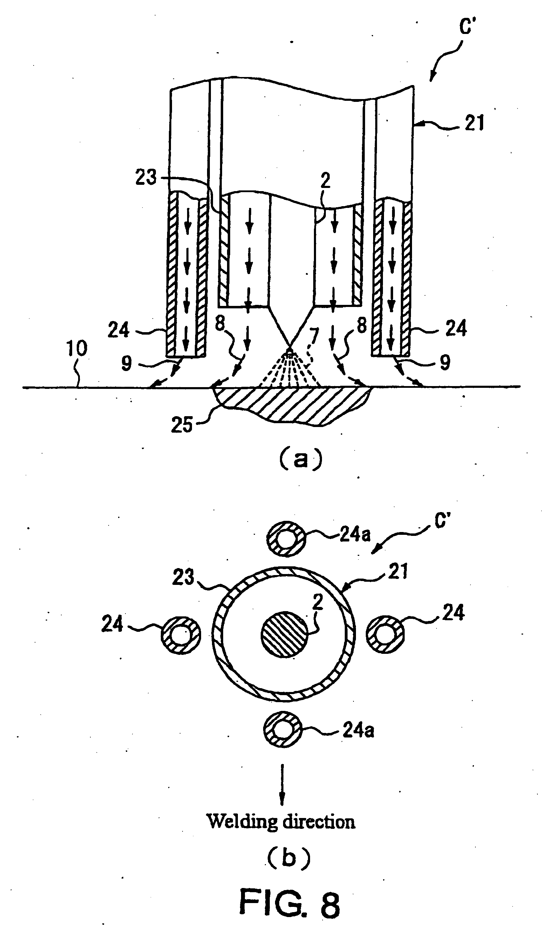

In this invention, one or more side nozzles can be further disposed on the front and/or the back side of the electrode. Referring to FIG. 8 that illustrates such a welding equipment, the welding equipment C' differs from the welding equipment C in FIG. 6 in that two more side nozzles 24a and 24b are further included. The two side nozzles 24a and 24b are disposed on the front side and the back side, respectively, of the tungsten electrode 2 outside the central nozzle 23, capable of supplying the second shielding gas 9.

Moreover, in the above welding equipment B, B', C or C', the side nozzles 14 or 24 are not necessarily disposed exactly on two sides of the tungsten electrode 2, and their positions may deviate forward or backward.

Some examples of this invention are described as follows. In the examples, SUS304-type stainless steel having low sulfur concentration is used as the base material 10. The compositional components of the stainless steel are listed in Table 1.

**Table 1**

| Component | C | Si | Mn | Ni | Cr | P | S | O | Fe |
|---|---|---|---|---|---|---|---|---|---|
| Amount (wt%) | 0.06 | 0.44 | 0.96 | 8.19 | 18.22 | 0.027 | 0.001 | 0.0038 | --- |

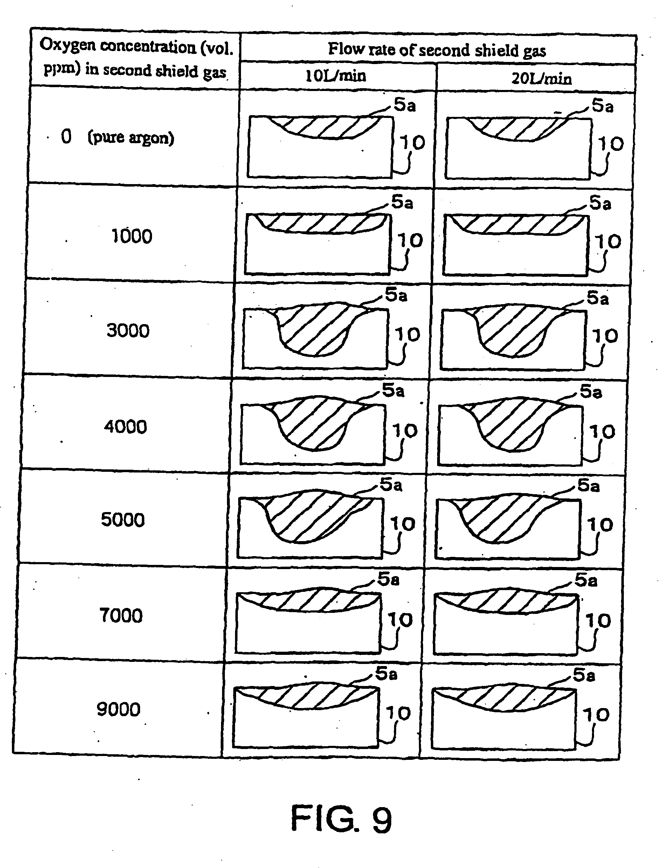

In the examples, the welding equipment A illustrated in FIG. 1 is used, the first shielding gas 8 is argon, and the second shielding gas 9 is a mixed gas obtained by adding oxygen (O₂) as an oxidative gas into argon as an inert gas. Some welding tests of the base material 10 are performed under the above conditions, and then the cross sections of the welded metal portions 5a are observed. In the welding tests, the oxygen concentration in the second shielding gas 9 ranges from 1000-9000 vol. ppm, and the flow rate of the second shielding gas 9 is 10L/min or 20L/min. The cross section of the welded metal portion 5a obtained in each test is shown in FIG. 9, while the testing result obtained by using pure argon instead of the second shielding gas 9 is also included for comparison. The other welding conditions are listed in Table 2.

**Table 2**

| Item | Condition |
|---|---|
| Type of electrode | DCEN, W-2%ThO₂ (tungsten electrode containing 2% of thorium) |
| Diameter of electrode | 1.6mm |
| Tip angle of electrode | 60° |
| Shielding gas | Ar gas, O₂/Ar mixed gas |
| Flow rate of gas | 10L/min or 20L/min |
| Arc length | 3mm |
| Bead length | 50mm |
| Welding time | 3 seconds |
| Welding current | 160A |
| Welding speed | 2mm/sec |

As shown in FIG. 9, the welded metal portion 5a can be formed more deeply in the tests using the second shielding gas 9 containing oxygen, as compared with the tests using pure argon (O₂ concentration = 0 vol. ppm) instead of the second shielding gas 9. Moreover, when the oxygen concentration in the second shielding gas 9 is within the range of 2000-6000 vol. ppm, especially within the range of 3000-5000 vol. ppm, the welded metal portion 5a is formed deeply in particular.

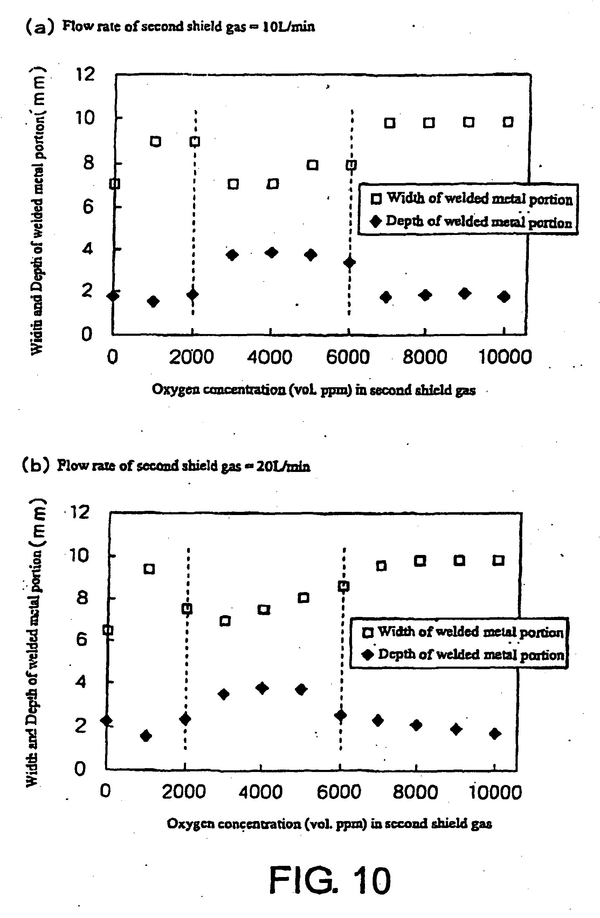

FIG. 10 shows the correlation between the oxygen concentration in the second shielding gas 9 and the dimensions of the welded metal portion 5a, wherein FIG. 10(a)/(b) shows the results when the flow rate of the second shielding gas 9 is 10/20L·min ⁻¹. As shown in FIG. 10, the width of the weld bead 6 is small and the welded metal portion 5a is formed deeply particularly when the oxygen concentration in the second shielding gas 9 is 2000-6000 vol. ppm, preferably 3000-6000 vol. ppm, and more preferably 3000-5000 vol. ppm. The comparison is made with the cases where the oxygen concentration is under 1000 vol. ppm or above 7000 vol. ppm.

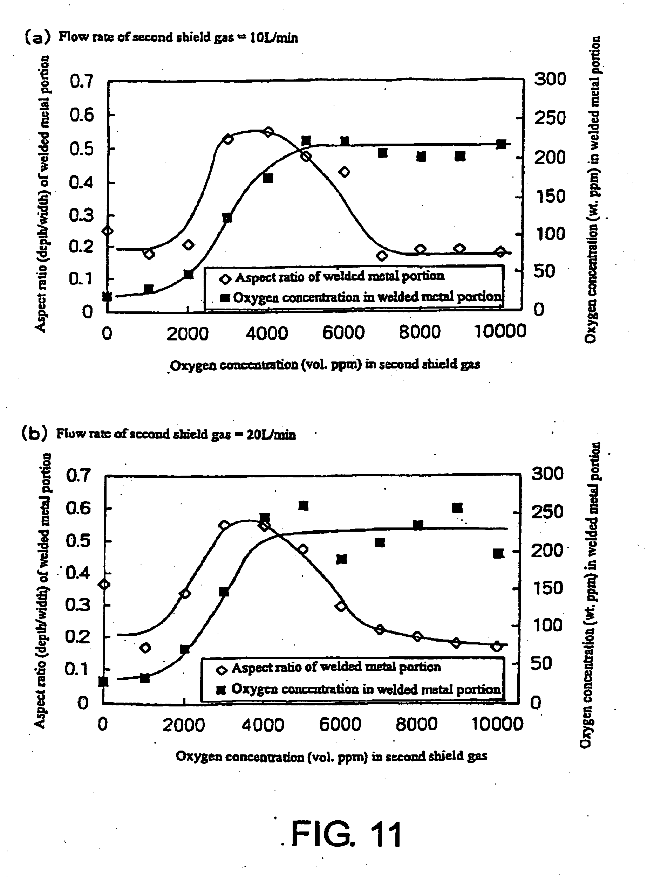

FIG. 11 shows the correlation between the oxygen concentration in the second shielding gas 9 and the aspect ratio and the oxygen content (wt. ppm) of the welded metal portion 5a, wherein FIG. 11(a)/(b) shows the results when the flow rate of the second shielding gas 9 is 10/20L·min⁻¹. The aspect ratio of the welded metal portion 5a is defined as the ratio of depth (D) to width (W) of the welded metal portion 5a. As shown in FIG. 11, the aspect ratio of the welded metal portion 5a is higher when the second shielding gas 9 containing oxygen is used, as compared with the cases using pure argon gas. It is also noted that the aspect ratio of the welded metal portion 5a is relatively high when the oxygen concentration in the second shielding gas 9 is within the range of 2000-6000 vol. ppm, especially within the range of 3000-5000 vol. ppm.

Moreover, the oxygen concentration in the welded metal portion 5a increases with raise in the oxygen concentration in the second shielding gas 9. The oxygen concentration in the welded metal portion 5a is about 200 wt. ppm when the oxygen concentration in the second shielding gas 9 reaches about 5000 vol. ppm, and is approximately a constant (220 wt. ppm) when the latter exceeds about 6000 vol. ppm. The aspect ratio of the welded metal portion 5a is relatively high when the oxygen concentration in the welded metal portion 5a is 70-220 wt. ppm, especially 70-200 wt. ppm, and the welded metal portion gets shallow when the oxygen concentration is outside the range. This is because the thickness of the oxide coating formed on the surface of the weld bead is overly large.

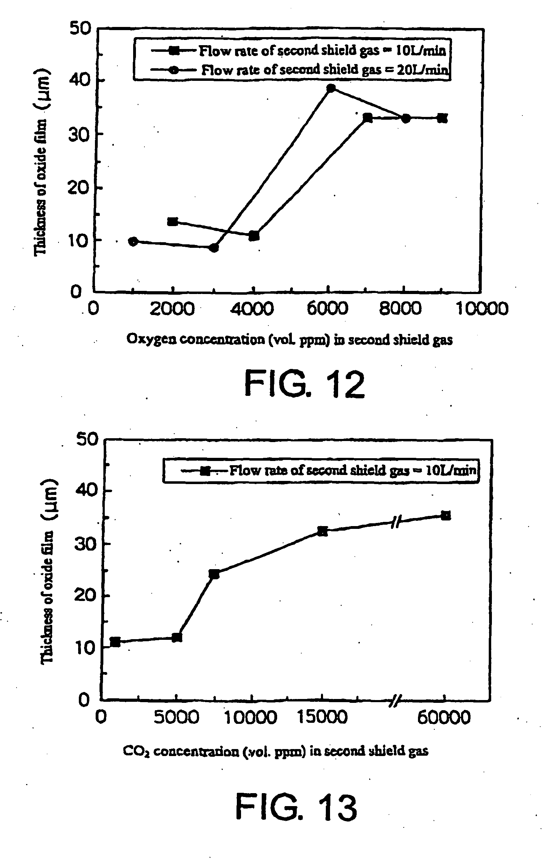

FIG. 12 is a graph showing the correlation between the oxygen concentration in the second shielding gas 9 and the thickness of the oxide coating formed on the surface of the welded metal portion 5a. FIG. 13 is a graph showing the correlation between the CO₂ concentration in the second shielding gas 9 and the thickness of the oxide coating formed on the surface of the welded metal portion 5a when CO₂ is used as the oxidative gas in the second shielding gas 9. As shown in the two graphs, the oxide coating gets thick when the concentration of the oxidative gas exceeds 6000 vol. ppm, while a thick oxide coating retards the convection in the molten pool 5 so that the welded metal portion 5a cannot be formed deeply. Meanwhile, the corrosion resistance and the appearance of the welded structure are also degraded. Therefore, the concentration of the oxidative gas is preferably 6000 vol. ppm or less, and more preferably 5000 vol. ppm or less.

Accordingly, when the composition of the second shielding gas 9 is set so that the oxygen concentration in the welded metal portion 5a is 70-220 wt. ppm, the welded metal portion 5a can be formed with a good shape. In addition, in the cases using a second shielding gas obtained by adding oxygen into argon gas, the shape of the welded metal portion 5a and the welding efficiency both can be improved when the welding current is 160A, the welding speed is 2mm/sec and the oxygen concentration in the second shielding gas 9 is 2000-6000 vol. ppm.

Moreover, in the cases with other welding condition, for example, the cases where CO₂ or the like is used as the oxidative gas, the operation condition is also set so that the oxygen concentration in the welded metal portion 5a is 70-220 wt. ppm.

### Advantages of the Invention

The TIG welding methods of this invention provides at least the following advantages. First of all, the electrode can be protected from being deteriorated by oxidation, since the first shielding gas composed of an inert gas is conducted surrounding the electrode. Therefore, the welded structure can be obtained with good welding quality.

Moreover, the first shielding gas composed of an inert gas can be supplied to the central region of the molten pool and the second shielding gas containing an oxidative gas to the peripheral region of the molten pool. Thereby, the molten pool can be supplied with oxygen in a required concentration, and the oxygen concentration in the peripheral region of the molten pool can be higher than that in the central region. Therefore, in the molten pool, the surface tension in the peripheral region having lower temperature and higher oxygen concentration is smaller, and that in the central region having higher temperature and lower oxygen concentration is larger. Consequently, inward convection is induced in the molten pool, and the molten pool can be formed deeply. Therefore, the welded metal portion can be formed deeply in the welded object.

Furthermore, as compared with the conventional welding method using active flux, slag is hardly generated in this invention so that a slag removal operation is not required. Moreover, fume is also hardly generated during the welding operation. Therefore, the welding operation can be carried out easily.

In addition, since the welded metal portion can be formed deeply, occurrence of poor weld-penetration or reduction in welding efficiency can be prevented.

It will be apparent to those skilled in the art that various modifications and variations can be made to the structure of the present invention without departing from the scope of the invention. In view of the foregoing, it is intended that the present invention covers modifications and variations of this invention provided they fall within the scope of the following claims.

## Claims

1. A TIG welding method,
comprising generating an electric arc (7) between an electrode (2) and an object (10) to weld the object, where the object (10) is of a steel based material,
wherein a first shielding gas (8) comprising an inert gas is conducted toward the welded object (10) surrounding the electrode (2),
**characterised in that**
a second shielding gas (9) containing an oxidative gas is conducted toward the welded object (10) along a periphery of the first shielding gas (8), and
wherein, the concentration of the oxidative gas in the second shielding gas (9) is set so that in a metal portion (5a) of the welded object (10), the oxygen concentration is set at 70 wt. ppm to 220 wt. ppm and an oxide coating is formed on the surface of the welded metal portion (6) that has a thickness of 20 µm or less.

2. A TIG welding method,
comprising generating an electric arc (7) between an electrode (2) and an object (10) to weld the object, where the object (10) is of a steel based material,
wherein a first shielding gas (8) comprising an inert gas is conducted toward the welded object (10) surrounding the electrode,
**characterised in that**
a second shielding gas (9) containing an oxidative gas is conducted toward the welded object (10) from at least two sides (14) of the electrode (2) as viewed in a welding direction, and
wherein the concentration of the oxidative gas in the second shielding gas (9) is set so that in a welded metal portion (5a) of the welded object (10), an oxygen concentration is set at 70 wt. ppm to 220 wt. ppm and an oxide coating is formed on the surface of the welded metal portion (6) that has a thickness of 20 µm or less.

3. The TIG welding method of claim 1, wherein a concentration of the oxidative gas in the second shielding gas (9) ranges from 2000 vol. ppm to 6000 vol. ppm.

4. The TIG welding method of claim 2, wherein a concentration of the oxidative gas in the second shielding gas (9) ranges from 2000 vol. ppm to 6000 vol. ppm.

5. The TIG welding method of claim 1, wherein a concentration of the oxidative gas in the second shielding gas (9) ranges from 3000 vol. ppm to 5000 vol. ppm.

6. The TIG welding method of claim 2, wherein a concentration of the oxidative gas in the second shielding gas (9) ranges from 3000 vol. ppm to 5000 vol. ppm.

## Patentansprüche

1. TIG Schweißverfahren, umfassend
Erzeugen eines Lichtbogens (7) zwischen einer Elektrode (2) und einem Objekt (10), um das Objekt zu schweißen, wobei das Objekt (10) aus einem stahlbasierendem Material gefertigt ist, worin ein erstes Schutzgas (8), das ein Edelgas umfasst, auf das geschweißte Objekt (10) geleitet wird und die Elektrode umgibt, **dadurch gekennzeichnet, dass**
ein zweites Schutzgas (9), das ein oxidatives Gas beinhaltet, auf das geschweißte Objekt (10) entlang der Umgebung des ersten Schutzgases (8) geleitet wird, und wobei die Konzentration des oxidativen Gases im zweiten Schutzgas (9) derart festgelegt ist, dass in einem geschweißten Metallteil (5a) des geschweißten Objekts (10), die Sauerstoffkonzentration bei 70 wt. ppm bis 220 wt. ppm festgelegt ist und eine Oxidschicht auf der Oberfläche des geschweißten Metallteils (6) gebildet wird, die eine Dicke von 20 µm oder weniger hat.

2. TIG Schweißverfahren, umfassend
Erzeugen eines Lichtbogens (7) zwischen einer Elektrode (2) und einem Objekt (10), um das Objekt zu schweißen, wobei das Objekt (10) aus einem stahlbasierendem Material gefertigt ist, worin ein erstes Schutzgas (8), das ein Edelgas umfasst, auf das geschweißte Objekt (10) geleitet wird und die Elektrode umgibt, **dadurch gekennzeichnet, dass**
ein zweites Schutzgas (9), das ein oxidatives Gas beinhaltet, auf das geschweißte Objekt (10) von mindestens zwei Seiten (14) der Elektrode (2) aus Sicht einer Schweißrichtung geleitet wird, und wobei die Konzentration des oxidativen Gases im zweiten Schutzgas (9) derart festgelegt ist, dass in einem geschweißten Metallteil (5a) des geschweißten Objekts (10), die Sauerstoffkonzentration bei 70 wt. ppm bis 220 wt. ppm festgelegt ist und eine Oxidschicht auf der Oberfläche des geschweißten Metallteils (6) gebildet wird, die eine Dicke von 20µm oder weniger hat.

3. TIG Schweißverfahren gemäß Anspruch 1, wobei eine Konzentration des oxidativen Gases im zweiten Schutzgas (9) von 2000 Vol. ppm bis 6000 Vol. ppm reicht.

4. TIG Schweißverfahren gemäß Anspruch 2, wobei eine Konzentration des oxidativen Gases im zweiten Schutzgas (9) von 2000 Vol. ppm bis 6000 Vol. ppm reicht.

5. TIG Schweißverfahren gemäß Anspruch 1, wobei eine Konzentration des oxidativen Gases im zweiten Schutzgas (9) von 3000 Vol. ppm bis 5000 Vol. ppm reicht.

6. TIG Schweißverfahren gemäß Anspruch 2, wobei eine Konzentration des oxidativen Gases im zweiten Schutzgas (9) von 3000 Vol. ppm bis 5000 Vol. ppm reicht.

## Revendications

1. Procédé de soudage TIG, comprenant la génération d'un arc électrique (7) entre une électrode (2) et un objet (10) pour souder l'objet, où l'objet (10) est constitué d'un matériau à base d'acier, où un premier gaz protecteur (8) comprenant un gaz inerte est conduit vers l'objet soudé (10) entourant l'électrode (2), **caractérisé en ce qu'**un second gaz protecteur (9) contenant un gaz oxydant est conduit vers l'objet soudé (10) le long d'une périphérie du premier gaz protecteur (8), et où la concentration du gaz oxydant dans le second gaz protecteur (9) est définie de sorte que, dans une portion de métal soudée (5a) de l'objet soudé (10), la concentration en oxygène est définie de 70 ppm en poids à 220 ppm en poids et qu'un revêtement d'oxyde est formé sur la surface de la portion de métal soudée (6) qui a une épaisseur de 20 µm ou moins.

2. Procédé de soudage TIG, comprenant la génération d'un arc électrique (7) entre une électrode (2) et un objet (10) pour souder l'objet, où l'objet (10) est constitué d'un matériau à base d'acier, où un premier gaz protecteur (8) comprenant un gaz inerte est conduit vers l'objet soudé (10) entourant l'électrode (2), **caractérisé en ce qu'**un second gaz protecteur (9) contenant un gaz oxydant est conduit vers l'objet soudé (10) à partir d'au moins deux côtés de l'électrode (2) comme visualisé dans une direction de soudage, et où la concentration du gaz oxydant dans le second gaz protecteur (9) est définie de sorte que, dans une portion de métal soudée (5a) de l'objet soudé (10), une concentration en oxygène est définie de 70 ppm en poids à 220 ppm en poids et qu'un revêtement d'oxyde est formé sur la surface de la portion de métal soudée (6) qui a une épaisseur de 20 µm ou moins.

3. Procédé de soudage TIG selon la revendication 1, dans lequel la concentration du gaz oxydant dans le second gaz protecteur (9) va de 2 000 ppm en volume à 6 000 ppm en volume.

4. Procédé de soudage TIG selon la revendication 2, dans lequel la concentration du gaz oxydant dans le second gaz protecteur (9) va de 2 000 ppm en volume à 6 000 ppm en volume.

5. Procédé de soudage TIG selon la revendication 1, dans lequel la concentration du gaz oxydant dans le second gaz protecteur (9) va de 3 000 ppm en volume à 5 000 ppm en volume.

6. Procédé de soudage TIG selon la revendication 2, dans lequel la concentration du gaz oxydant dans le second gaz protecteur (9) va de 3 000 ppm en volume à 5 000 ppm en volume.
